# EUROPEAN PATENT SPECIFICATION

(11) **EP 0 755 088 B1**
(45) Date of publication and mention of the grant of the patent: **30.06.2004**
(21) Application number: 96401589.5
(22) Date of filing: 17.07.1996
(51) Int. Cl.: H01M 8/18, B60L 11/18, B60L 11/12, B60L 7/10, H01M 8/06, H01M 8/04

(54) **Regenerative power system**
Regenerierbares Leistungssystem
Système de puissance régénérable

(30) Priority: 21.07.1995 JP 18454295
(43) Date of publication of application: 22.01.1997
(73) Proprietor: RAILWAY TECHNICAL RESEARCH INSTITUTE, Kokubunji-shi Tokyo (JP)
(72) Inventor: Oki, Yasutsugu, Tachikawa-shi, Tokyo (JP); Hasegawa, Hitoshi, Kokubunji-shi, Tokyo (JP); Ito, Toshikatsu, Kokubunji-shi, Tokyo (JP)
(74) Representative: Loisel, Bertrand

(56) References cited:
- US-A- 3 981 745
- US-A- 4 839 247
- US-A- 5 306 577
- US-A- 5 346 778
- PATENT ABSTRACTS OF JAPAN vol. 018, no. 658 (E-1643), 13 December 1994 & JP 06 260201 A (MITSUBISHI HEAVY IND LTD), 16 September 1994

## Description

### Background of the Invention

### Field of the Invention

The present invention relates to a hybrid power system which uses two electric power supply devices which comprise a basic electric power supply device which is used to adjust instantaneously excesses and deficiencies of basic electric power and a substitutive electric power supply device to cancel electric power excess and inevitable, sudden, instantaneous, or short time deficiencies which always occurs to a greater or a lesser extent as far as electric power is used in the field wherein electric power is partly or entirely utilized and in all the systems having various and utilizable states of power from a first stage wherein the power is generated to a final stage such as a mechanical system, an electric system, etc.

More specifically, the present invention relates to a hybrid power system that functions as a load for storing energy when electric power is in excess at a powerplant, a ground substation, or a car of the required load that is connected to the electric power system of the required load of the car; and relates to a hybrid power system that supplies a required load with electric power from the substitutive electric power supply device for adjustment when the electric power is in short supply.

### Description of the Related Art

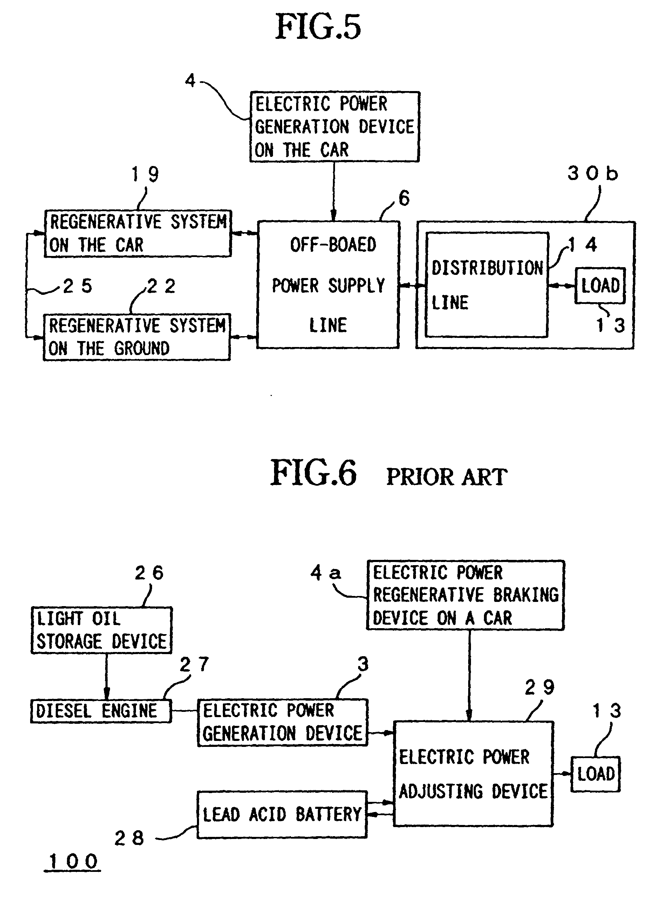

Referring to FIG. 6, a conventional hybrid power system is described. Hybrid power system 100 which is shown in FIG. 6 is composed of light oil storage device 26 as an energy storage device, diesel engine 27 as an energy converter, electric power generation device 3, electric power regenerative braking device 4a on a car such as a regenerative device, lead acid battery 28, and electric power adjusting device 29. Hybrid power system 100 is an accumulator battery regeneration-type hybrid power device on a car for supplying load 13 which comprises a driving apparatus, etc., with electric power. For example, the hybrid power device 100 that is shown in this figure is installed in a diesel locomotive. At a common time, it generates electric power by means of electric power generation device 3 that uses diesel engine 27 as a driving source and it supplies the electric power to load 13 to run the car thereon and it also charges lead acid battery 28 with surplus power. When an electric power shortage occurs for a short time occurs, the electric power that is lacking is made up by the discharging of lead acid battery 28. The electric power that is generated by regenerative power generation by means of electric power generation device 4 on the car is used for charging lead acid battery 28.

Some examples of such a hybrid power system are shown in "Internal Combustion Engine and Accumulator" (Intersociety Energy Conversion Engineering Conference: IECEC, 15th, 1980, Vol. 3, pp. 1760) and "Hybrid Power Device of External Combustion Engine and Accumulator" (IECEC, 27th, 1992. Vol. 3, pp. 3167). However, there were the problems that the charging ability (kW), which is determined by the charging speed of the accumulator, was low; and that the charging electric energy (kWh) per weight was also low in such conventional systems. There is another hybrid power device which employs an internal combustion engine and a flywheel (IECEC, 25th, 1994, pp. 205-211). However, this device has a problem that the charging capability (kWh) per flywheel weight is remarkably low in present circumstances. There is another hybrid power device that includes an internal combustion engine and a thermoelectric converter, but it has a problem of a remarkably low thermoelectric conversion efficiency (IECEC, 25th 1994, pp.1419). There is another hybrid power device which includes the hybrid power device of a fuel cell and an accumulator (IECEC, 23rd, 1988, pp. 227), but it has a problem that the weight energy efficiency of the accumulator and charging ability thereof are very low.

Such conventional hybrid power devices are realized by combining multiple power generation devices that are already being put to practical use. Those hybrid power devices employ multiple power generation sources and utilize a mutually complementing relationship between themselves to make up for respective defective points with mutual strong points and therefore a power supply system is comprised, which is more advanced than one comprising an independent power device. Though such a conventional device has now been in part made fit for practical use, each device has a certain problem in regenerative ability associated with charging ability, discharging ability, charging quantity, etc., per weight and volume.

Moreover, there is a regenerative and reproductive-type power device, which is regarded as a regenerative-type power device that employs a single energy storing device belonging to a power device, to draw out stored power to meet the required power when it is required after storing the power to the energy storing device, which is collected from the kinetic energy of a car by means of a regenerative braking (IECEC, 25th, 1994 pp.1430). However, there was a problem of low efficiency which accompanied the regeneration and reproduction in such a conventional regenerative-type power device.

Moreover, as a regenerative-type power device for use in space, there is a system that employs a regenerative fuel cell to generate electric power, which utilizes hydrogen and oxygen which are stored up as fuel beforehand by electrolyzing water by means of a water electrolysis device that employs a solar battery (IECEC, 24th 1989, pp. 1631).

However, this regenerative fuel cell is excessively used for storing and for reproducing energy but does not have the purpose of power sustenance of a high rank order. As a corresponding system that is used on the ground, there is a similar regenerative fuel cell system (International Hydrogen and Clean Energy Symposium sponsored by NEDO, 1995, pp. 31), but it is used only for storing and regenerating energy and it does not have a purpose of sustenance of required power of a high rank order by means of energy storing of surplus power and energy discharging in a maximum efficiency operation utilizing all the ability of power generation. There is also a pumped-storage power station as another regenerative-type power generation system (The Journal of the Institute of Electrical Engineers of Japan, Vol. 115-B, 6, 1995, pp. 447). The location of the pumped-storage power station is generally remote from the place of demand. Therefore, that system has a problem that power transmission loss is inevitable.

In addition, there is a system employing a governor, etc., to adjust a supply and demand balance which is influenced by a change of the electric power load and the change of generation power due to an extraordinary parallel off of an electric power generation device, etc., but there is still a problem that an adjustment speed is not always as fast as is expected in conventional electric power systems.

### Summary of the Invention

It is an object of the present invention to solve the above-mentioned problems by realizing a speedy energy conversion and storage system in a high power generation system to maintain high energy to weight and volume efficiency.

According to the present invention, a regenerative-type hybrid power system as set forth in claim 1 is provided.

The devices according to the present invention may function as devices which can be installed near the place of demand, i.e., may function as devices on site and on board. The devices on site and on board may increase the quality of the power by means of regenerative energy conversion devices which may achieve high efficiency conversion, storage and generation of high power energy; and thereby improvement of the overall energy conversion efficiency of a car, and improvement of the electric power quality of electric power systems are expected. Moreover, high level utilization of equipment which uses electric power depending on the improvement can be expected. That is, in the system wherein a hybrid composition which generally includes a substitutive power generation source can be established, by which the present invention is mainly characterized, by means of a hybrid regenerative device which has a regenerative energy conversion ability which provides a high speed energy conversion, storage and generation in a device on site and on board. By utilizing surplus power when the surplus power occurs, water is electrolyzed by a water electrolysis device with high efficiency. The hydrogen and oxygen which are generated by the water electrolysis are stored to a hydrogen and oxygen storage device, or the only generated hydrogen is stored if a fuel cell generates electricity using oxygen in air. Electric power is generated by a fuel cell which uses the stored hydrogen and oxygen as fuel and supplies hybrid power appropriately when power is lacking. Characteristically, conversion and storage of high speed energy and generation of high electric power can be realized while high energy weight and volume efficiency is maintained. In addition, by making a high quality power by means of regenerative energy conversion at an electric power supply device according to a regenerative-type hybrid power system of the present invention, it is possible to improve total conversion efficiency in an electric power system and an electric power quality for a moving object.

Moreover, the effect that electric power utilizing equipment can be used with a high level of power is obtainable because of these improvement.

### Brief Description of the Drawings

FIG. 1 is a block diagram which illustrates a composition example of a hybrid power system of self-excitation and regeneration on a car, which is one of the preferred embodiments of the present invention.
FIG. 2 is a block diagram which illustrates another preferred embodiment of a hybrid power system of external-excitation and regeneration on a car according to the present invention.
FIG. 3 is a block diagram which illustrates another preferred embodiment of a hybrid power system of self- and external-excitation and regeneration on the ground according to the present invention.
FIG. 4 is a block diagram which illustrates another preferred embodiment of a hybrid power system of external-excitation and regeneration on the ground according to the present invention.
FIG. 5 is a block diagram which illustrates another preferred embodiment of a hybrid power system of linkage regeneration on the ground and on a car according to the present invention.
FIG. 6 is a block diagram of a conventional regenerative-type hybrid power supply device by a regeneration with an accumulator on a car.

### Description of the Preferred Embodiments

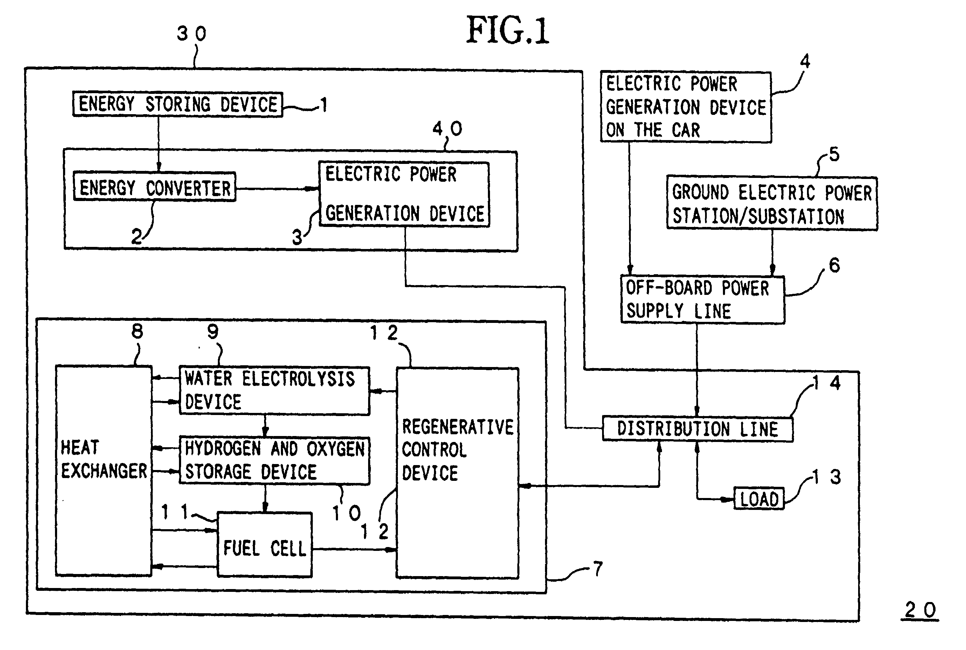

One preferred embodiment of a hybrid power system according to the present invention is described referring to FIG. 1. FIG. 1 shows a hybrid power system of a self-excitation and regeneration on a car. Hybrid power system 20 which is shown in this figure employs an electric power generation device 40 for generating electric power, which includes energy storing device 1, and energy converter 2 and electric power generation device 3 and is installed on car 30 such as an electric rolling stock (hereinafter, car 30 may be regarded to include an electric car, an electric locomotive, etc.,) to generate electric power on car 30. There is electric power generation device 4 on another adjacent car, which consists of a regenerative apparatus, etc., and ground electric power station/substation 5 outside car 30 and they are connected with off-board power supply line (system) 6, which comprises a contact system as an overhead current collective system, no-contact system, such as a system using pickup coils or a third-rail-conductor-sysrem, etc., together with electric power generation device 40. Moreover, regenerative fuel cell 7 is installed onto car 30.

Regenerative fuel cell 7 is composed of heat exchanger 8 which cools and heats each device and atmosphere, water electrolysis device (electrolyzer) 9 which electrolyzes water, hydrogen and oxygen storage device 10 which stores up hydrogen and oxygen which are decomposed by water electrolysis device 9 and are regarded as a chemical energy, fuel cell 11 which generates electricity by using the hydrogen and oxygen as fuel, and regenerative control device 12 which controls the electric power to be supplied to water electrolysis device 9 and the electric power which fuel cell 11 generates. Regenerative control device 12 supervises the excess or deficiency condition of the electric power which is supplied through distribution line 14 on car 30, and when lacking, it controls each device so as to supply the direct current or alternating current power required by load 13 such as that consists of loads for driving, such as motors, etc., and the other electric loads directly from fuel cell 11 or after changing the state if necessary. Regenerative control device 12 also controls each device so as to control water electrolysis device 9 to electrolyze the stored water by supplying electric power from off-board power supply line 6 to water electrolysis device 9 through distribution line 14 on the car when there is a surplus (room) of electric power in the electric power on the power supply side as seen from off-board power supply line 6. Regenerative control device 12, then controls hydrogen and oxygen storage device 10 to store the hydrogen and oxygen which are generated.

If there is surplus electric power on the power supply side as seen from off-board power supply line 6 when regenerative braking is activated at load 13, regenerative control device 12 also controls each device in order for water electrolysis device 9 to electrolyze the stored water by supplying electric power from load 13 in regenerative braking condition to water electrolysis device 9 through distribution line 14 on the car and it controls hydrogen and oxygen storage device 10 to store the hydrogen and oxygen which are generated. The preferred embodiment which is shown in FIG. 1 can be thought of as a system of self-excitation on a car because it is equipped with one of the electric power supply sources for load 13 on car 30. That is, the hybrid power system in FIG. 1 includes electric power generation device 40 on the car as well as electric power generation devices on the ground and regenerative fuel cell 7. Moreover, it can be thought of as a system of self-excitation and regeneration on the car because regenerative fuel cell 7 for regenerating electric power is also installed on car 30.

As a modification of the preferred embodiment shown in FIG. 1, in case of omitting energy converter 2, such as a combustion engine, etc., which indirectly converts the electric energy, configuration of electric power generation device 40 may be changed to modify the generation system between energy storing device 1 and electric power generation device 3 to directly connect energy storing device 1 and electric power generation device 3. It is also possible to think that load 13 includes not only the loads which are installed on car 30 but also includes loads outside on other cars. A device for acquiring atmospheric air (oxygen) may be employed instead of the device for storing only oxygen in hydrogen and oxygen storage device 10. Furthermore, these modifications can be applied in the same way to the preferred embodiments which are described below.

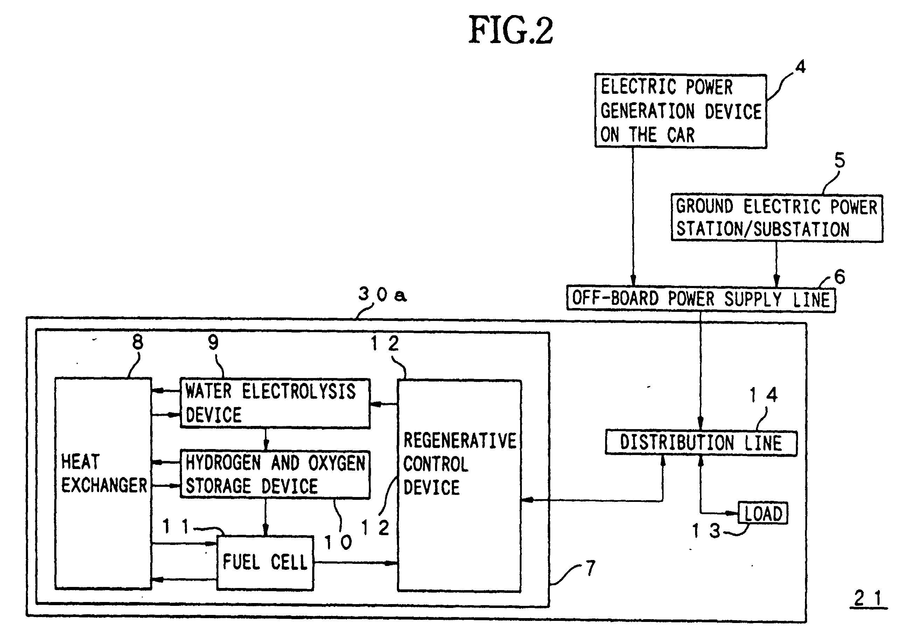

Next, another preferred embodiment of a hybrid power system according to the present invention is explained using FIG. 2. FIG. 2 shows a composition of a hybrid power system consisting of off-board power supply systems (external-excitation systems) as contact systems, and on-board power supply systems (regeneration systems on a car). In addition, in FIG. 2, identical reference numerals are attached to the components which are identical with those in FIG. 1 (as in all following examples).

Hybrid power system 21 which is shown in this figure is composed of an electric power generation device 4 such as a regenerative apparatus, which is located on a car, ground electric power station/substation 5, and off-board power supply line 6, all of which exist outside car 30a; and regenerative fuel cell 7, load 13 as a driving apparatus, and distribution line 14, which is located on a car, all of which are installed in car 30a. In this preferred embodiment, all the electric power which is supplied to regenerative fuel cell 7 which is installed in car 30a is supplied from the outside of car 30a as long as generation of electricity by regenerative braking of load 13 is not activated. Regenerative fuel cell 7 is composed of heat exchanger 8, water electrolysis device 9, hydrogen storage device 10, fuel cell 11, and regenerative control device 12 as in FIG. 1. When electric power is determined to be lacking, regenerative control device 12 supplies load 13 with the output of fuel cell 11, as supplement power to supply on-board load from external power (power from electric power generation device 4, etc.), directly, or indirectly after changing the state of the output to an alternating current or a direct current power supply to meet the requirements of load 13, through distribution line 14. On the other hand, when the electric power is determined to be surplus, regenerative control device 12 operates water electrolysis device 9, hydrogen storage device 10, and heat exchanger 8 to store hydrogen.

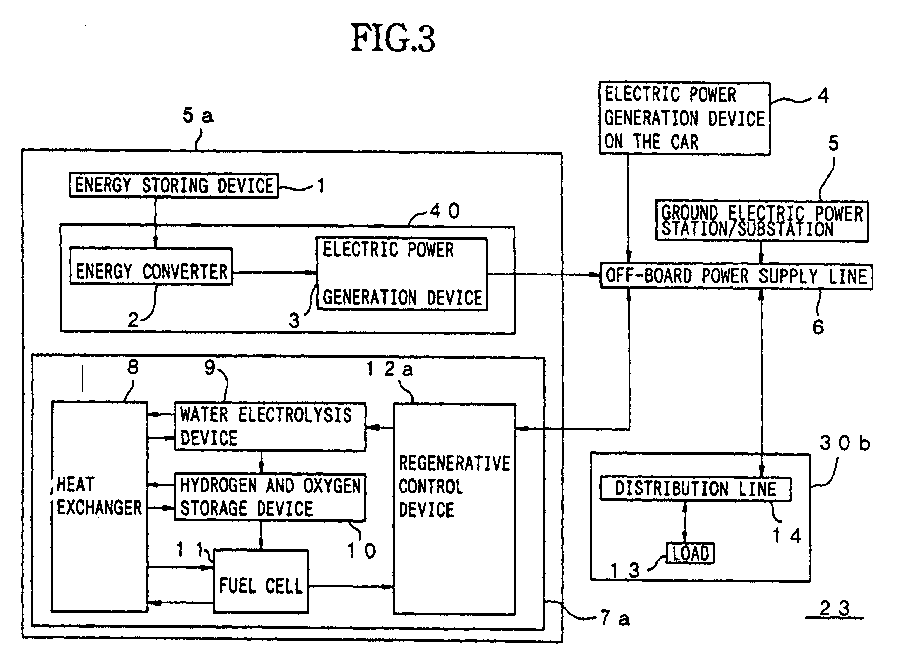

Next, another preferred embodiment of a hybrid power system according to the present invention is explained referring to FIG. 3. Hybrid power system 23 which is shown in FIG. 3 is a hybrid power system of self-excitation and external excitation, and regeneration on the ground. Hybrid power system 23 is characterized in that the system is equipped with ground substation 5a which is set up on the ground and consists of energy storing device 1; electric power generation device 40 having energy converter 2 and electric power generation device 3; and regenerative fuel cell 7a. On the ground, hybrid power system 23 also has electric power generation device 4 on another car comprising a regenerative apparatus, etc., and ground electric power station/substation 5 as other electric power sources; and also has off-board power supply line 6. Therefore, in this preferred embodiment, only load 13 and distribution line 14 are provided in car 30b and car 30b is not equipped with any device for generating electric power. Electric power for load 13 is supplied through off-board power supply line 6 and distribution line 14, which is on the car, from ground substations 5 and 5a and electric power generation device 4 which is on another car. Regenerative fuel cell 7a is composed of heat exchanger 8, water electrolysis device 9, hydrogen storage device 10, fuel cell 11, all of which are composed like the corresponding components shown in FIG. 1, and regenerative control device 12a. Regenerative control device 12a determines the excess or deficiency condition of electric power and, when lacking, it supplies the electric power that fuel cell 11 generates to load 13, such as a driving device, through off-board power supply line 6 and distribution line 14, which is located on the car, directly or indirectly after changing the state of the electric power to an alternating current or a direct current power which load 13 requires according to demand. When the electric power is determined to be surplus, regenerative control device 12a operates water electrolysis device 9, hydrogen storage device 10, and heat exchanger 8 so as to store hydrogen.

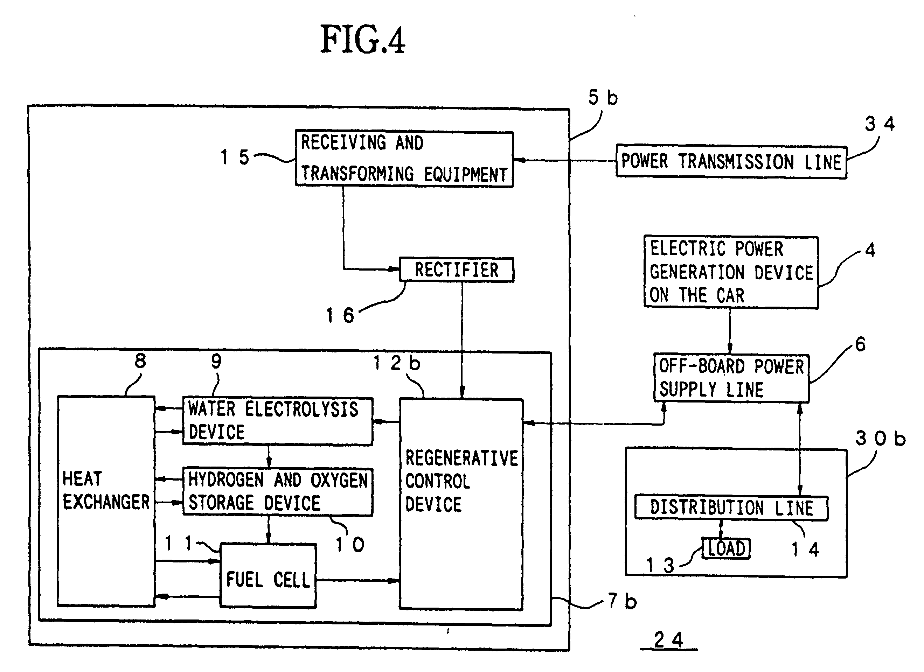

Next, another preferred embodiment of a hybrid power system according to the present invention is explained referring to FIG. 4. FIG. 4 illustrates a hybrid power system consisting of power transmission lines as grid and regeneration equipment on the ground. The power transmission line 34 is placed in a supervising area of a power supplier, which is determined with a contract between the power supplier and a demand user. In the hybrid power system in FIG. 4, ground substation 5b has no equipment for power generation. Electric power is supplied to load 13 through off-board power supply line 6 from regenerative control device 12b, which may include a DC-DC converter, a DC-AC inverter, etc., or directly from receiving and transforming equipment 15 which is connecting with power transmission line 34 when load 13 is an AC type or directly from rectifier 16 when load 13 is a DC type, without passing through control device 12b (these routes are not illustrated). Electric power is also supplied to load 13 through off-board power supply line 6 from an electric power generation device 4, such as a regenerative braking apparatus, which is on another car. In ground substation 5b, the electric power which is supplied from power transmission line 34 is supplied to regenerative control device 12b, for instance, after being transformed by receiving and transforming equipment 15 and being rectified by rectifier 16 if the supplied power is alternating current power of commercial power frequency. Regenerative fuel cell 7b which is installed in ground substation 5b is composed of heat exchanger 8, water electrolysis device 9, hydrogen storage device 10, fuel cell 11, and regenerative control device 12b. Regenerative control device 12b supervises the excess or deficiency condition of electric power and, when determined as lacking, it supplies the electric power of fuel cell 11 to load 13 through off-board power supply line 6 and distribution line 14, directly or indirectly after changing the state of the electric power to an alternating or a direct current power which load 13 requires according to demand. When electric power is determined to be surplus, regenerative control device 12b operates water electrolysis device 9, hydrogen storage device 10, and heat exchanger 8 so as to store hydrogen.

Furthermore, the composition of ground substation 5b is not restricted to the one described above. For instance, it is possible to supply electric power to load 13 through receiving and transforming equipment 15 directly from power transmission line 34 by installing a converter into regenerative control device 12b to convert the alternating current to a direct current and then to omit the rectifier 16.

Next, another preferred embodiment of a hybrid power system according to the present invention is described referring to FIG. 5. The system which is shown in FIG. 5 comprises a regenerative fuel cell for linkage regeneration on the ground and on a car. The system is composed of regeneration system 19, which is located on a car, and which is the same as that shown in FIG. 1 or FIG. 2 (system 20 of FIG. 1, or system 21 of FIG. 2); and regeneration system 22, which is located on the ground, which is the same as that shown in FIG. 3 or FIG. 4 (system 23 of FIG. 3, or system 24 of FIG. 4)

Each hybrid power system works in close cooperation to supply a load 13, such as a driving device, with electric power. In this system, linkage line 25 is provided between regeneration system 19, which is located on a car, and regeneration system 22, which is located on the ground, to send and receive control signals which are utilized for linking control of electric power in each system. The hybrid power system of FIG. 5 operates each system in a linked condition or operates each system independently corresponding to various conditions. The system has a high degree of freedom of operation and therefore can easily realize energy storage and energy discharge of surplus power which is produced by a maximum efficiency operation of power generation ability. Therefore, the sustenance of high rank order power can be more easily achieved than in the other preferred embodiments.

Next, operations and possible effects when utilizing the above-mentioned hybrid power systems are hereinafter described.
(1) Speedup of cars using existing substation capacity.
   With increasing distance from a substation, even if the substation has enough substation capacity or the substation has a constant voltage control system, the voltage of a feeder circuit falls due to the voltage drop by the feeder circuit constant. A run curve which is used as a condition for determining the standard operation time of an operating train is fixed in order that the feeder voltage does not fall below an allowable minimum voltage in each feeder section, presupposing there is a certain voltage drop by a feeder circuit. Therefore, a voltage surplus is caused in some feeder sections. Using a hybrid power system according to the present invention, by storing electric power into a regenerative fuel cell at a feeder section in which a surplus voltage is caused and by regenerating the electric power stored up in a feeder section in which a voltage drop occurs, an apparent impedance of the feeder circuit which is seen from a load on a car can be reduced by this usage. It is also possible to regard the feeder circuit, as seen from the load on the car, as a constant voltage power supply without changing existing substation capacity by this usage. A higher allowable minimum setting voltage can, therefore, be used when the run curve of the car is determined, and increases in the speed of the car can also be realized.
(2) Prevention of a substation capacity increase and establishment of a new substation for high power trains which run in low frequency in feeder sections that are designed as a railway for a standard train organization, and the effect of preventing the feeder voltage from being less than an allowable minimum voltage
   Substation capacity is set to correspond sufficiently to a standard train organization which runs in a feeder section. On the other hand, there are some needs for electric locomotives which have bigger outputs than standard train organizations for high power trains like limited express trains which have relatively longer train organizations, etc., to run in low frequency in the feeder section in which a substation capacity is determined according to a standard train organization. However, in conventional systems, it is not possible to run such irregular train organizations without changing facilities because a lack of a substation capacity, or the occurrence of feeder voltage falling below an allowable minimum voltage due to a voltage drop are always expected. On the other hand, if using a hybrid power system according to the present invention, it is possible to prevent the lack of a substation capacity and the fall of a voltage below the allowable minimum voltage due to a voltage drop, and it is, therefore, possible to avoid a substation capacity increase, and the establishment of a new substation to run high power trains which are use in low frequency.
(3) Reduction effect of capital expenses for new line construction by extending substation interval for trains which run on the new line in a low frequency
   By introduction of a hybrid power system of regeneration on a car according to the present invention, it is possible to extend the substation interval because it is possible to generate electricity on a car to supplement the power or the voltage which is lacking in the middle of adjacent substations or at the end section of a one-direction sending substation.
(4) Service improvement effects by avoiding railcar operation in electrified sections or transferring passengers at points between electrified.and non-electrified sections
   There is an example that a mixed car comprising an electric car and a railcar is used for sections which include both electrified and non-electrified sections in a conventional system. However, if a hybrid power system of on-car-regeneration according to the present invention is introduced, it is possible to organize a train using only electric cars and thereby obtain high serviceability. If the train is equipped with a regenerative fuel cell, it is possible to run the train through non-electrified sections located between electrified sections when the non-electrified sections are relatively short. It is also possible to avoid upgrading of narrow tunnels when electrifying a railroad with frame lines by leaving the tunnel as a non-electrified section and running trains equipped with a regenerative fuel cell in the tunnel. Therefore, the investment effect of electrification improves because expensive tunnel upgrading expenses can be reduced.
(5) Energy saving operation by using deactivated electric power during regenerative braking generation of electricity
   Electric power generated by regenerative braking is basically supplied to another car which runs close to the car that generates the power. However, when the regenerative braking power is surplus for the reason that there is no train running nearby, etc., the regenerative braking power is deactivated to prevent a voltage rise in the feeder circuit. On the other hand, it is possible to utilize such deactivated electric power for charging a regenerative fuel cell if a hybrid power system according to the present invention is employed. Therefore, an energy saving effect, a substation capacity reduction effect, a shoe consumption reduction effect, etc., may be expected if a hybrid power system according to the present invention is introduced.
(6) Capital expenses reduction effect by eliminating installation of spare conversion equipment
   In conventional systems, spare electric power conversion equipment is required to prevent train operation hindrance in the case of trouble with regularly used conversion equipment. However, a hybrid power system according to the present invention can avoid the installation of spare conversion equipment because a regenerative fuel cell can be used instead of the spare conversion equipment. That is, it is possible to prevent train operation hindrance even if the regularly used conversion equipment causes trouble and the above-described capital expenses reduction effect may be expected.

In addition to the above-mentioned possibilities, there are some other possibilities as follows. A fixed minimum charge for a power company is determined by a measured demand peak value. Therefore, an effect of a reduction in expenses cut effect may be expected because reduction in the peak value may be possible with a hybrid power system that has multiple supplies on a car and on the ground. When attempting stable electric power transmission in an electric power system, there are some criteria to be secured with regard to voltage stability as well as steady-state stability and transition stability for electric power. In the past, for electric power stability, stabilization of electric power is attempted by controlling the reactive power of lead and lag by means of SVC, SVG, a synchronous phase modifier, etc. For voltage stabilization, stabilization of voltage is attempted by cancellation of tide deviation in an electric power system by means of a proper arrangement of the power supply, promotion of transmission voltage, increase and buildup of power transmission lines and substations, etc. These conventional methods are associated with impedance control (mainly controlling reactance) or voltage source control during electric power transmission and fast control speed is requested in such a control.

On the other hand, if using a hybrid power system according to the present invention, it is possible to easily solve the problem because the control speed of the hybrid power system of the present invention is faster than those of the conventional methods. The problem of an electric current increase can also be improved because a regenerative fuel cell operates as an electric current source. Moreover, steady-state stabilization and transition stabilization of the electric power and stabilization of the voltage can be improved at the same time because on-site power generation system approaching the place of demand can be established according to the present invention.

Usage efficiencies of electric power facilities by time average such as a whole day average, one month average, one season average, and one year average are not always so high although a spare supply percentage which is a facility surplus percentage at a peak in electric power systems is normally less than 10% and does not include such a large margin. In the present invention, the water electrolysis device and the hydrogen and oxygen storage can operate as a load for load leveling. That is, regeneration at the regenerative fuel cell may be used for controlling steady-state and transition stabilization of electric power and voltage stabilization by utilizing the stored energy of hydrogen and oxygen generated by the regenerative generation.

## Claims

1. A regenerative-type hybrid power system of an off-board power supply system and an on-board power supply system, comprising :
a first car which has a load that comprises an electric load for driving ;
electric power generation means comprising an on-board regenerative apparatus as a first electric power supply device that is provided on said first car and generates electric power, a ground electric power station /substation as a second electric power supply device which is provided on the ground and generates electric power and transmits and transforms the generated power, and a regenerative fuel cell as a third electric power supply device which is provided on a second car that is different from said first car and supplies to the outside electric power that is surplus via an off-board power supply line ;
a regenerative fuel cell for storing a chemical energy by utilizing the electric power that is supplied from said electric power generation means and for regenerating electric power using the stored chemical energy, which comprises a water electrolysis device that electrolyzes water, a storage device which stores up at least the hydrogen between the electrolyzed hydrogen and oxygen, a fuel cell that generates electricity using the hydrogen that is stored up by said storage device and oxygen as fuel, and a heat exchanger that exchanges heat of said water electrolysis device, said storage device, said fuel cell, and atmosphere ;
regenerative control means for controlling regeneration of electric power by said regenerative fuel cell to supplement lack of the electric power that is supplied to said load.

2. A regenerative-type hybrid power system according to Claim 1, wherein said regenerative control means controls regeneration of the electric power to supplement the lack of electric power by
operating said water electrolysis device and storing up at least the hydrogen between the generated hydrogen and oxygen to said storage device according to demand, if one among the electric power that is supplied from said electric power generation means, the regenerative braking power that is regenerated by said electric load for driving, and the sum of both electric power exceeds electric power consumed by said load when electric power is regenerated by said electric load for driving, and
operating said fuel cell with the hydrogen stored up and oxygen according to demand after making a predetermined economical decision in electric fee system, when the electric power that is supplied from said electric power generation means falls below the electric power consumed by said load.

3. A regenerative-type hybrid power system according to Claim 1, wherein said electric power generation means includes at least said second electric power supply device ; and the second electric power supply device and said first car comprise said regenerative fuel cells, respectively ; and said regenerative control means control regeneration of the electric power that both the fuel cells regenerate, which said second electric power supply device and said first car comprise, by linkage operation according to demand.

4. A regenerative-type hybrid power system according to Claim 1, wherein said electric power generation means includes at least said second electric power supply device ; and the second electric power supply device and said first car comprise said regenerative fuel cells, respectively ; and said regenerative control means control regeneration of the electric power that the fuel cells regenerate, which said second electric power supply device and said first car comprise, according to a demand to maintain a maximum efficiency operation of regeneration in both the fuel cells by linkage operation.

5. A regenerative-type hybrid power system according to Claim 1, comprising :
electric power generation and supply means for generating electric power and supplying an electric power system with the electric power ;
a regenerative fuel cell for storing a chemical energy by utilizing the electric power which is supplied from said electric power generation and supply means and for regenerating the electric power by utilizing the stored chemical energy, comprising :
a water electrolysis device which electrolyzes water,
a storage device which stores up at least the hydrogen between the electrolyzed hydrogen and oxygen,
a fuel cell which uses the hydrogen which is stored up to the storage device and oxygen as fuel and generates electricity, and
a heat exchanger which exchanges heat of the water electrolysis device, the storage device, the fuel cell and atmosphere ;
a load for receiving electric power from said electric power generation and supply means and said regenerative fuel cell ;
regenerative control means which compares a supply and demand difference between the generated electric power of said electric power generation and supply means and the electric power which said load receives, and when the generated electric power is a supply surplus, operates said water electrolysis device with a surplus power of the generated electric power if necessary and stores up at least the electrolyzed hydrogen, and when the generated electric power is lacking, controls excess and surplus of the electric power, which occurs in said electric power system, by regenerating electric power by said fuel cell with the stored hydrogen and oxygen,
wherein said electric power generation and supply means include at least a second electric power supply device ; and the second electric power supply device comprises said regenerative fuel cell,
and said regenerative control means control regeneration of the electric power that the fuel cell which said second electric power supply device comprises regenerates by linkage operation according to demand.

## Patentansprüche

1. Hybrid-Energiesystem vom regenerativen Typ eines außen gelegenen Energieversorgungssystems und eines innen gelegenen Energieversorgungssystems, mit:
einem ersten Wagen, der eine Last hat, die eine elektrische Last zum Antreiben aufweist;
einer elektrischen Energieerzeugungseinrichtung mit einer innen gelegenen Regenerationsvorrichtung als erste elektrische Energieversorgungsvorrichtung, die an dem ersten Wagen vorgesehen ist und elektrische Energie erzeugt, einer elektrischen Boden-Energiestation/Unterstation als zweite elektrische Energieversorgungsvorrichtung, die am Boden vorgesehen ist und elektrische Energie erzeugt und die erzeugte Energie sendet und transformiert, und einer regenerativen Brennstoffzelle als dritte elektrische Energieversorgungsvorrichtung, die an einem zweiten Wagen vorgesehen ist, der unterschiedlich vom ersten Wagen ist, und elektrische Energie, die überschüssig ist, über eine außen gelegene Energieversorgungsleitung nach außen zuführt;
einer regenerativen Brennstoffzelle zum Speichern chemischer Energie durch Verwenden der elektrischen Energie, die von der elektrischen Energieerzeugungseinrichtung zugeführt wird, und zum Regenerieren elektrischer Energie unter Verwendung der gespeicherten chemischen Energie, welche eine Wasserelektrolysevorrichtung aufweist, die Wasser elektrolysiert, eine Speichervorrichtung, die wenigstens den Wasserstoff zwischen dem elektrolysierten Wasserstoff und Sauerstoff speichert, eine Brennstoffzelle, die Elektrizität unter Verwendung des Wasserstoffs erzeugt, der durch die Speichervorrichtung gespeichert ist, und von Sauerstoff als Brennstoff, und einen Wärmetauscher, der Wärme der Wasserelektrolysevorrichtung, der Speichervorrichtung, der Brennstoffzelle und von Atmosphäre tauscht;
einer Regenerations-Steuereinrichtung zum Steuern einer Regeneration von elektrischer Energie durch die regenerative Brennstoffzelle zum Ergänzen eines Mangels der elektrischen Energie, die zu der Last zugeführt wird.

2. Hybrid-Energiesystem vom regenerativen Typ nach Anspruch 1, wobei die Regenerations-Steuereinrichtung eine Regeneration der elektrischen Energie zum Ergänzen des Mangels an elektrischer Energie steuert durch:
Betreiben der Wasserelektrolysevorrichtung und Speichern wenigstens des Wasserstoffs zwischen dem erzeugten Wasserstoff und dem erzeugten Sauerstoff zu der Speichervorrichtung gemäß einer Anforderung, wenn eine unter der elektrischen Energie, die von der elektrischen Energieerzeugungseinrichtung zugeführt wird, der Energie eines regenerativen Bremsens, die durch die elektrische Last zum Antreiben regeneriert wird, und die Summe aus beiden elektrischen Energien eine elektrische Energie übersteigt, die durch die Last verbraucht wird, wenn elektrische Energie durch die elektrische Last zum Antreiben regeneriert wird, und
Betreiben der Brennstoffzelle mit gespeichertem Wasserstoff und Sauerstoff gemäß einer Anforderung nach einem Treffen einer vorbestimmten ökonomischen Entscheidung in einem elektrischen Kostensystem, wenn die elektrische Energie, die von der elektrischen Energieerzeugungseinrichtung zugeführt wird, unter die elektrische Energie abfällt, die durch die Last verbraucht wird.

3. Hybrid-Energiesystem vom regenerativen Typ nach Anspruch 1, wobei die elektrische Energieerzeugungseinrichtung wenigstens die zweite elektrische Energieversorgungsvorrichtung enthält; und die zweite elektrische Energieversorgungsvorrichtung und der erste Wagen jeweils die regenerativen Brennstoffzellen aufweisen; und die Regenerations-Steuereinrichtung eine Regeneration der elektrischen Energie steuert, die die beiden Brennstoffzellen regenerieren, welche die zweite elektrische Energieversorgungsvorrichtung und der erste Wagen aufweisen, durch eine Verbindungsoperation gemäß einer Anforderung.

4. Hybrid-Energiesystem vom regenerativen Typ nach Anspruch 1, wobei die elektrische Energieerzeugungseinrichtung wenigstens die zweite elektrische Energieversorgungsvorrichtung enthält; und die zweite elektrische Energieversorgungsvorrichtung und der erste Wagen jeweils die regenerativen Brennstoffzellen aufweisen; und die Regenerations-Steuereinrichtung eine Regeneration der elektrischen Energie steuert, die die Brennstoffzellen regenerieren, die die zweite elektrische Energieversorgungsvorrichtung und der erste Wagen aufweisen und zwar gemäß einer Anforderung, um einen Betrieb mit einer maximalen Effizienz einer Regeneration in den beiden Brennstoffzellen beizubehalten, und zwar durch eine Verbindungsoperation.

5. Hybrid-Energiesystem vom regenerativen Typ nach Anspruch 1, das folgendes aufweist:
eine elektrische Energieerzeugungs- und -versorgungseinrichtung zum Erzeugen elektrischer Energie und zum Versorgen eines elektrischen Energiesystems mit der elektrischen Energie;
eine regenerative Brennstoffzelle zum Speichern einer chemischen Energie durch Verwenden der elektrischen Energie, die von der elektrischen Energieerzeugungs- und -versorgungseinrichtung zugeführt wird, und zum Regenerieren der elektrischen Energie durch Verwenden der gespeicherten chemischen Energie, mit:
einer Wasserelektrolysevorrichtung, die Wasser elektrolysiert,
einer Speichervorrichtung, die wenigstens den Wasserstoff zwischen dem elektrolysierten Wasserstoff und dem Sauerstoff speichert,
einer Brennstoffzelle, die den Wasserstoff, der zu der Speichervorrichtung gespeichert ist und Sauerstoff als Brennstoff verwendet und Elektrizität erzeugt, und
einem Wärmetauscher, der Wärme der Wasserelektrolysevorrichtung, der Speichervorrichtung, der Brennstoffzelle und von Atmosphäre austauscht;
eine Last zum Empfangen elektrischer Energie von der elektrischen Energieerzeugungs- und -versorgungseinrichtung und der regenerativen Brennstoffzelle;
eine Regenerations-Steuereinrichtung, die eine Versorgungs- und Anforderungs-Differenz zwischen der erzeugten elektrischen Energie der elektrischen Energieerzeugungs- und -versorgungseinrichtung und der elektrischen Energie, die die Last empfängt, vergleicht, und dann, wenn die erzeugte elektrische Energie ein Versorgungsüberschuss ist, die Wasserelektrolysevorrichtung mit einer überschüssigen Energie der erzeugten elektrischen Energie betreibt, wenn es nötig ist, und wenigstens den elektrolysierten Wasserstoff speichert, und dann, wenn die erzeugte elektrische Energie fehlt, ein Übermaß und einen Überschuss an elektrischer Energie steuert, welcher in dem elektrischen Energiesystem auftritt, indem elektrische Energie durch die Brennstoffzelle mit dem gespeicherten Wasserstoff und Sauerstoff regeneriert wird,
wobei die elektrische Energieerzeugungs- und -versorgungseinrichtung wenigstens eine zweite elektrische Energieversorgungsvorrichtung enthält; und die zweite elektrische Energieversorgungsvorrichtung die regenerative Brennstoffzelle aufweist,
und die Regenerations-Steuereinrichtung eine Regeneration der elektrischen Energie, die die Brennstoffzelle, die die zweite elektrische Energieversorgungsvorrichtung aufweist, regeneriert, und zwar durch eine Verbindungsoperation gemäß einer Anforderung.

## Revendications

1. Un système de fourniture d'énergie hybride du type à récupération, comprenant un système d'alimentation hors véhicule et un système d'alimentation embarqué, comportant :
un premier véhicule qui a une charge qui comprend une charge électrique pour l'entraînement;
un moyen de génération d'énergie électrique comprenant un appareil de récupération embarqué, en tant que premier dispositif d'alimentation électrique qui est installé dans le premier véhicule et génère de l'énergie électrique, une centrale / sous-station électrique au sol, en tant que second dispositif d'alimentation électrique qui est installé au sol et génère de l'énergie électrique et transmet et transforme l'énergie générée, et une pile à combustible de récupération, en tant que troisième dispositif d'alimentation électrique, qui est installée sur un second véhicule qui est différent du premier véhicule, et fournit à l'extérieur de l'énergie électrique en surplus, par l'intermédiaire d'une ligne d'alimentation hors véhicule;
une pile à combustible de récupération pour stocker une énergie chimique en utilisant l'énergie électrique qui est fournie par le moyen de génération d'énergie électrique, et pour récupérer de l'énergie électrique en utilisant l'énergie chimique stockée, qui comprend un dispositif d'électrolyse d'eau qui électrolyse de l'eau, un dispositif de stockage qui stocke au moins l'hydrogène parmi l'hydrogène et l'oxygène électrolysés, une pile à combustible qui génère de l'électricité en utilisant en tant que combustible l'hydrogène qui est stocké par le dispositif de stockage et de l'oxygène, et un échangeur de chaleur qui échange de la chaleur du dispositif d'électrolyse d'eau, du dispositif de stockage, de la pile à combustible et de l'atmosphère;
un moyen de commande de récupération pour commander la récupération d'énergie électrique par la pile à combustible de récupération, pour compenser une insuffisance de l'énergie électrique qui est fournie à la charge.

2. Un système de fourniture d'énergie hybride du type à récupération selon la revendication 1, dans lequel le moyen de commande de récupération commande la récupération de l'énergie électrique pour compenser l'insuffisance d'énergie électrique en
faisant fonctionner le dispositif d'électrolyse d'eau et stockant dans le dispositif de stockage au moins l'hydrogène parmi l'hydrogène et l'oxygène produits, conformément à la demande, si l'une parmi l'énergie électrique qui est fournie par le moyen de génération d'énergie électrique, l'énergie de freinage par récupération qui est récupérée par la charge électrique pour l'entraînement, et la somme des deux énergies électriques, dépasse l'énergie électrique consommée par la charge lorsque de l'énergie électrique est récupérée par la charge électrique pour l'entraînement, et
faisant fonctionner la pile à combustible avec l'hydrogène stocké et l'oxygène, conformément à la demande, après avoir pris une décision économique prédéterminée dans un système de tarification électrique, lorsque l'énergie électrique qui est fournie par le moyen de génération d'énergie électrique tombe au-dessous de l'énergie électrique consommée par la charge.

3. Un système de fourniture d'énergie hybride du type à récupération selon la revendication 1, dans lequel le moyen de génération d'énergie électrique comprend au moins le second dispositif d'alimentation en énergie électrique; et le second dispositif d'alimentation électrique et le premier véhicule comprennent respectivement lesdites piles à combustible de récupération; et le moyen de commande de récupération commande la récupération de l'énergie électrique que récupèrent les deux piles à combustibles, que comprennent le second dispositif d'alimentation électrique et le premier véhicule, par un fonctionnement en couplage, conformément à la demande.

4. Un système de fourniture d'énergie hybride du type à récupération selon la revendication 1, dans lequel le moyen de génération d'énergie électrique comprend au moins le second dispositif d'alimentation électrique; et le second dispositif d'alimentation électrique et le premier véhicule comprennent respectivement lesdites piles à combustible; et le moyen de commande de récupération commande la récupération de l'énergie électrique que régénèrent les piles à combustibles, que comprennent le second dispositif d'alimentation électrique et le premier véhicule, conformément à la demande, pour maintenir un fonctionnement de récupération au rendement maximal dans les deux piles à combustibles, par un fonctionnement en couplage.

5. Un système de fourniture d'énergie hybride du type à récupération selon la revendication 1, comprenant :
un moyen de génération et de fourniture d'énergie électrique pour générer de l'énergie électrique et fournir l'énergie électrique à un système d'énergie électrique;
une pile à combustible de récupération pour stocker une énergie chimique en utilisant l'énergie électrique qui est fournie par le moyen de génération et de fourniture d'énergie électrique, et pour récupérer l'énergie électrique en utilisant l'énergie chimique stockée, comprenant :
un dispositif d'électrolyse d'eau qui électrolyse de l'eau,
un dispositif de stockage qui stocke au moins l'hydrogène parmi l'hydrogène et l'oxygène électrolysés,
une pile à combustible qui utilise comme combustible l'hydrogène qui est stocké dans le dispositif de stockage et de l'oxygène, et génère de l'électricité, et
un échangeur de chaleur qui échange de la chaleur du dispositif d'électrolyse d'eau, du dispositif de stockage, de la pile à combustible et de l'atmosphère;
une charge pour recevoir de l'énergie électrique à partir du moyen de génération et de fourniture d'énergie électrique et de la pile à combustible de récupération;
un moyen de commande de récupération qui compare une différence d'offre et de demande entre l'énergie électrique générée du moyen de génération et de fourniture d'énergie électrique et l'énergie électrique que la charge reçoit, et qui lorsque l'énergie électrique générée est en surplus, fait fonctionner le dispositif d'électrolyse d'eau avec un surplus de l'énergie électrique générée, si nécessaire, et stocke au moins l'hydrogène électrolysé, et lorsque l'énergie électrique générée est insuffisante, commande l'excès et le surplus de l'énergie électrique, apparaissant dans le système d'énergie électrique, en récupérant de l'énergie électrique par la pile à combustible avec l'hydrogène stocké et l'oxygène,
dans lequel le moyen de génération et de fourniture d'énergie électrique comprend au moins un second dispositif d'alimentation électrique; et le second dispositif d'alimentation électrique comprend ladite pile à combustible de récupération,
et le moyen de commande de récupération commande la récupération de l'énergie électrique que récupère la pile à combustible qui fait partie du second dispositif d'alimentation électrique, par un fonctionnement en couplage conformément à la demande.
